# EUROPEAN PATENT APPLICATION

(11) **EP 1 059 313 A1**
(43) Date of publication of application: **13.12.2000**
(21) Application number: 00112160.7
(22) Date of filing: 06.06.2000
(51) Int. Cl.: C08F 210/02, C08F 212/08, C08F 4/70

(54) **Transition metal catalyst component for polymerization, aromatic vinyl compound-olefin copolymer and process for its production by means of the catalyst component**

(30) Priority: 08.06.1999 JP 16100499
(71) Applicant: DENKI KAGAKU KOGYO KABUSHIKI KAISHA, Chiyoda-ku Tokyo (JP)
(72) Inventor: Otsu, Toshiaki, c/o Denki Kagaku Kogyo K. K., Machida-shi, Tokyo (JP); Arai, Toru, c/o Denki Kagaku Kogyo K. K., Machida-shi, Tokyo (JP); Nakajima, Masataka, c/o Denki Kagaku Kogyo K. K., Machida-shi, Tokyo (JP)
(74) Representative: Hartz, Nikolai F., Dr.

(57) **Abstract**

A method for producing an aromatic vinyl compound-olefin copolymer, which comprises copolymerizing an aromatic vinyl compound with an olefin by means of a transition metal catalyst component of the following formula (1): 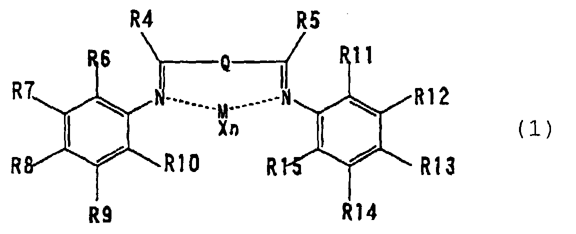 wherein Q is a single bond connecting the carbon atoms of the two imino groups, or a C₄₋₂₀ substituted aromatic, C₁₋₂₀ substituted saturated aliphatic or substituted unsaturated aliphatic substituent connecting the two imino groups, provided that from 1 to 3 carbon atoms in the substituted aromatic, substituted saturated aliphatic or substituted unsaturated aliphatic substituent may be replaced by nitrogen, oxygen, sulfur or phosphorus,
each of R4 and R5 which are independent of each other, is hydrogen, a C₁₋₂₀ alkyl group, a C₆₋₁₀ aryl group, or a C₇₋₂₀ alkylaryl group,
each of R6, R7, R8, R9 and R10 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R6 to R10 may together form a 5- to 8-membered aromatic or aliphatic ring, and the total carbon number of R6 and R10 is at least 2, or R6 and/or R10 forms a ring,
each of R11, R12, R13, R14 and R15 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R11 to R15 may together form a 5- to 8-membered aromatic or aliphatic ring, and the total carbon number of R11 and R15 is at least 2, or R11 and/or R15 forms a ring, and
M is a metal atom of Group 5 to Group 12, X is an anion, n is a number corresponding to the oxidation number of the metal and takes a value of 0, 1, 2 or 3.

## Description

The present invention relates to a metal compound for polymerization, a method for producing an aromatic vinyl compound-olefin copolymer employing it, and a novel aromatic vinyl compound-olefin copolymer.

For the production of a copolymer of an olefin with an aromatic vinyl compound, such as ethylene with styrene, studies have been conducted primarily by using so-called heterogeneous Ziegler-Natta catalysts (e.g. Polymer Bulletin, 20, 237-241 (1988), Macromolecules, 24, 5476 (1991)). However, conventional heterogeneous Ziegler-Natta catalyst systems are not so practical, since the catalytic activities are low, the styrene content in the product is very low at a level of a 1 mol%, or the product does not have a uniform regular copolymer structure or contains a substantial amount of homopolymers such as polyethylene and isotactic or atactic polystyrene.

Further, some styrene-ethylene copolymers obtainable by using so-called single-site catalyst systems comprising a transition metal catalyst component and an organoaluminum compound, and methods for their production, have been known.

JP-A-3-163088 and JP-A-7-53618 disclose so-called pseudo random copolymers, obtained by using a complex having a so-called constrained geometrical structure.

Further, it has recently been reported to produce a styrene-ethylene copolymer close to an alternating copolymer having a stereoregularity under a condition of an extremely low temperature (-25°C) by using 1,2-ethylene(-CH₂-CH₂-) bridged bisindenyl type Zr complex; rac[ethylenebis(indenyl)zirconium dichloride) (Macromol. Chem., Rapid Commun., 17, 745 (1996)).

More recently, in JP-A-11-130808, it has been reported that a stereoregular random styrene-ethylene copolymer can be synthesized by means of a specific crosslinked bisbenzindenyl type zirconium complex.

On the other hand, in J. Am. Chem.. Soc. 120, 4049 (1998), polymerization of ethylene has been reported wherein pyridinebisimine complexes containing iron or cobalt as the center metal, is used. Further, in WO98/30612, polymerization of propylene has been reported wherein similar complexes are employed. However, these references disclose nothing about copolymerization of an aromatic vinyl compound with an olefin.

It is an object of the present invention to provide a transition metal compound for polymerization and a method for producing a novel aromatic vinyl compound-olefin copolymer employing it.

Firstly, the present invention provides a transition metal catalyst component of the following formula (1), preferably (2), as a catalyst component for polymerization to be used for copolymerization of an aromatic vinyl compound with an olefin: 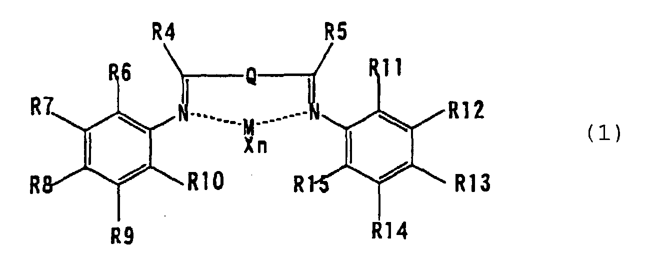 wherein Q is a single bond connecting carbon atoms of the two imino groups, or a C₄₋₂₀ substituted aromatic, C₁₋₂₀ substituted saturated aliphatic or substituted unsaturated aliphatic substituent connecting the two imino groups, provided that from 1 to 3 carbon atoms in the substituted aromatic, substituted saturated aliphatic or substituted unsaturated aliphatic substituent may be replaced by nitrogen, oxygen, sulfur or phosphorus.

The following structures may be mentioned as examples for the structure of Q in the diimino group containing Q.

The structure in which Q is a single bond, is represented by the following formula.

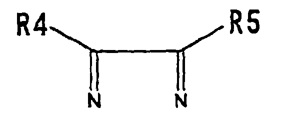

Structures of the following formulae may be mentioned as examples for the structure of the diimino group containing Q in a case where Q is a substituted aromatic group, but the useful structure is not limited thereto.

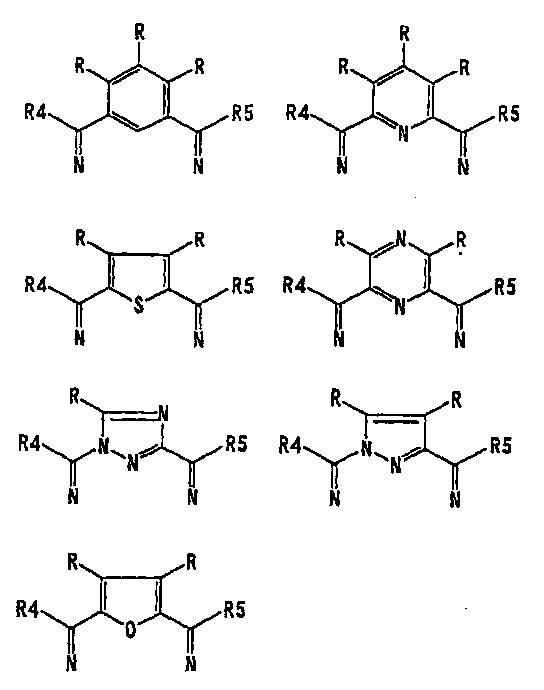

In the above formulae, the plurality of R which are independent of one another, is hydrogen, a C₁₋₂₀ alkyl group, a C₆₋₁₀ aryl group, a C₇₋₁₀ alkylaryl group, a halogen atom, an OSiA₃ group, a SiA₃ group, a PA₂ group (each A is a C₁₋₁₀ hydrocarbon group) or a NO₂ group, provided that adjacent plurality of R may together form a 5- to 8-membered aromatic or aliphatic ring.

The following examples may be mentioned for the structure of the diimino group containing Q in a case where Q is a substituted saturated aliphatic group, but the useful structure is not limited thereto.

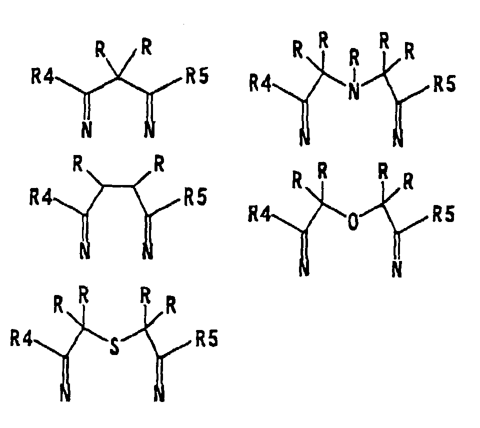

In the above formulae, the plurality of R which are independent of one another, is hydrogen, a C₁₋₂₀ alkyl group, a C₆₋₁₀ aryl group, a C₇₋₁₀ alkylaryl group, a halogen atom, an OSiA₃ group, a SiA₃ group, a PA₂ group (each A is a C₁₋₁₀ hydrocarbon group) or a NO₂ group, provided that adjacent plurality of R may together form a 5- to 8-membered aromatic or aliphatic ring.

The following examples may be mentioned for the structure of the diimino group in a case where Q is a substituted unsaturated aliphatic group, but the useful structure is not limited thereto.

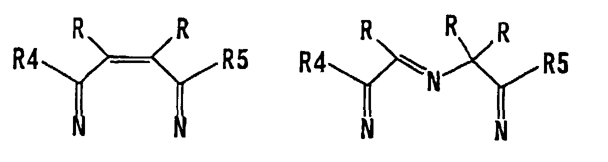

In the above formulae, the plurality of R which are independent of one another, is hydrogen, a C₁₋₂₀ alkyl group, a C₆₋₁₀ aryl group, a C₇₋₁₀ alkylaryl group, a halogen atom, an OSiA₃ group, a SiA₃ group, a PA₂ group (each A is a C₁₋₁₀ hydrocarbon group) or a NO₂ group, provided that adjacent plurality of R may together form a 5- to 8-membered aromatic or aliphatic ring.
Each of R4 and R5 which are independent of each other, is hydrogen, a C₁₋₂₀ alkyl group, a C₆₋₁₀ aryl group, or a C₇₋₂₀ alkylaryl group.
Each of R6, R7, R8, R9 and R10 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A is a C₁₋₁₀ hydrocarbon group) or a NO₂ group, provided that adjacent R6 to R10 may together form a 5- to 8-membered aromatic or aliphatic ring, and the total carbon number of R6 and R10 is at least 2, or R6 and/or R10 forms a ring.
Each of R11, R12, R13, R14 and R15 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A is a C₁₋₁₀ hydrocarbon group) or a NO₂ group, provided that adjacent R10 to R15 may together form a 5-to 8-membered aromatic or aliphatic ring, and the total carbon number of R11 and R15 is at least 2, or R11 and/or R15 forms a ring. M is a metal atom of Group 5 to Group 12, preferably an atom of Group 7 to Group 10, particularly preferably iron, cobalt or ruthenium.
X is an anion and may, for example, be hydrogen, a halogen atom, an alkyl group such as a methyl group or an ethyl group, an aryl group such as a phenyl group, a silyl group such as a trimethylsilyl group, or an alkoxy group such as a methoxy group, an ethoxy group or an isopropoxy group, an amide group such as a dialkylamide group, a diarylamide group or a bistrimethylsilylamide group, a sulfonate group such as a methanesulfonate group or a p-toluenesulfonate group, or a nitrous group. The plurality of X may be the same or different from one another.
n is a number corresponding to the oxidation number of the metal and takes a value of 0, 1, 2 or 3. For example, when the oxidation number of the center metal is 2, n takes a value of 2 and represents the same or different two anions.

With the transition metal catalyst component to be used in the present invention, when R10 and R15 are hydrogen, the corresponding R6 and R11 preferably have a bulkiness larger than the methyl group. With a transition metal compound wherein the total carbon number of R6 and R11 is less than 2, oligomerization of ethylene may take place preferentially rather than the copolymerization reaction of an aromatic vinyl compound with an olefin intended by the present invention. Namely, it is considered that by the steric space, the β-cleavage preferentially takes place, and the reaction tends to stop by oligomerization before the copolymerization of the aromatic vinyl compound.

Among compounds of the above formula (1), a transition metal compound of the following formula (2) is particularly preferably employed as a component for a polymerization catalyst for copolymerization of an aromatic vinyl compound with an olefin: 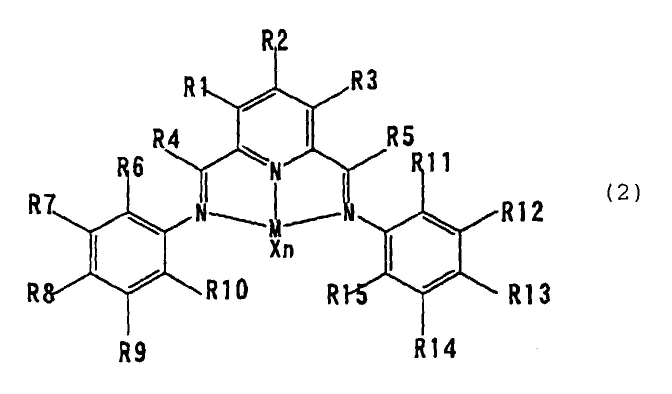 wherein each of R1, R2 and R3 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A is a C₁₋₁₀ hydrocarbon group), provided that adjacent R1, R2 and R3 may together form a 5- to 8-membered aromatic or aliphatic ring.
Each of R4 and R5 which are independent of each other, is hydrogen, a C₁₋₂₀ alkyl group, a C₆₋₁₀ aryl group, or a C₇₋₂₀ alkylaryl group.
Each of R6, R7, R8, R9 and R10 which are independent of one another is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A is a C₁₋₁₀ hydrocarbon group) or a NO₂ group, provided that adjacent R6 to R10 may together form a 5- to 8-membered aromatic or aliphatic ring, and the total carbon number of R6 and R10 is at least 2, or R6 and/or R10 forms a ring.
Each of R11, R12, R13, R14 and R15 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A is a C₁₋₁₀ hydrocarbon group) or a NO₂ group, provided that adjacent R11 to R15 may together form a 5-to 8-membered aromatic or aliphatic ring, and the total carbon number of R11 and R15 is at least 2, or R11 and/or R15 forms a ring.
M is a metal atom of Group 5 to Group 12, preferably an atom of Group 7 to Group 10, particularly preferably iron, cobalt or ruthenium.
X is an anion and may, for example, be hydrogen, a halogen atom, an alkyl group such as a methyl group or an ethyl group, an aryl group such as a phenyl group, a silyl group such as a trimethylsilyl group, an alkoxy group such as a methoxy group, an ethoxy group or an isopropoxy group, an amide group such as a dialkylamide group, a diarylamide group or a bistrimethylsilylamide group, a sulfonate group such as a methanesulfonate group or a p-toluenesulfonate group, or a nitrous group. The plurality of X may be the same or different from one another.
n is a number corresponding to the oxidation number of a metal and takes a value of 0, 1, 2 or 3. For example, when the oxidation number of the center metal is 2, n takes a value of 2 and represents the same or different two anions.

With the transition metal catalyst component to be used in the present invention, when R10 and R15 are hydrogen, the corresponding R6 and R11 preferably have a bulkiness larger than the methyl group. With a transition metal compound wherein the total carbon number of R6 and R11 is less than 2, oligomerization of ethylene may take place preferentially than the copolymerization reaction of an aromatic vinyl compound with an olefin intended by the present invention. Namely, it is considered that due to the steric space, the β-cleavage takes place preferentially, and the reaction is terminated by oligomerization before the copolymerization of the aromatic vinyl compound.

The following compounds may be mentioned as examples of such a transition metal catalyst component:
2,6-bis-[1-(2-isopropylphenylimino)ethyl]pyridine iron[II] chloride, 2,6-bis-[1-(2-isopropylphenylimino)ethyl]pyridine iron[II] bromide, 2,6-bis-[1-(2-isopropylphenylimino)ethyl]pyridine iron[II] bisdiethylamide, 2,6-bis-[1-(2-isopropylphenylimino)ethyl]pyridine iron[II] bistoluenesulfonate, 2,6-bis-[1-(2-isopropylphenylimino)methyl]pyridine iron[II] chloride, 1,3-bis-[1 (2-isopropylphenylimino)ethyl]isoquinoline iron[II] chloride, 2,6-bis-[1-(2,6-diisopropylphenylimino)ethyl]pyridine iron[II] chloride, 2,6-bis-[1-(2-isopropyl-6-methylphenylimino)ethyl]pyridine iron[II] chloride, 2,6-bis-[1-(2,6-dimethylphenylimino)ethyl]pyridine iron[II] chloride, 2,6-bis-[1-(2,4,6-trimethylphenylimino)ethyl]pyridine iron[II] chloride, 2,6-bis-[1-(2-t-butylphenylimino)ethyl]pyridine iron[II] chloride, 2,6-bis-[1-(2-ethyl-4-nitrophenylimino)ethyl]pyridine iron[II] chloride, 2,6-bis-[1-(2-isopropyl-4-nitrophenylimino)ethyl]pyridine iron[II] chloride, 2,6-bis-[1-(2,6-dimethyl-4-nitrophenylimino)ethyl]pyridine iron[II] chloride, 2,6-bis-[1-(2-isopropyl-4-chlorophenylimino)ethyl]pyridine iron[II] chloride, 2,6-bis-[1-(2-isopropyl-5-chlorophenylimino)ethyl]pyridine iron[II] chloride, 2,6-bis-[1-(1-naphthylimino)ethyl]pyridine iron[II] chloride, 2,6-bis-[1-(1-anthracenyl)imino)ethyl]pyridine iron[II] chloride, 2,6-bis-[1-(9-phenanthrylimino)ethyl]pyridine iron[II] chloride, 2,6-bis-[1-(2-isopropylphenylimino)ethyl]pyridine cobalt[II] chloride, 2,6-bis-[1-(2,6-dimethylphenylimino)ethyl]pyridine cobalt[II] bromide, 2,6-bis-[1-(2-isopropylphenylimino)ethyl]pyridine ruthenium[III] chloride, and 2,6-bis-[1-(2,4,6-trimethylphenylimino)ethyl]pyridine ruthenium[III] chloride.

These complexes can be synthesized by a known method such as a method disclosed in WO98/30612. Namely, a compound such as 2,6-diacetylpyridine is reacted for condensation with a corresponding amine to prepare a corresponding imine type ligand, which is then reacted with a desired metal salt in a solvent. At that time, such a complex may be subjected to evaporation to dryness without isolation or purification as the complex and may be used as a catalyst powder, or it may be used as a catalyst liquid in the form of a solution.

Further, the present invention provides a method for producing a copolymer of an aromatic vinyl compound with an olefin, which is characterized in that the copolymerization is carried out by means of a transition metal catalyst component of the above formula (1), preferably (2). In such copolymerization, it is preferred to employ a cocatalyst. The method for producing a copolymer of the present invention is an efficient method having a high productivity.

As the cocatalyst to be preferably used in the present invention, a cocatalyst which has been used in combination with a transition metal catalyst component, can be used. As such a cocatalyst, aluminoxane (or alumoxane), an alkylaluminum compound or a boron compound, is preferably employed.

Further, the present invention provides a method for producing an aromatic vinyl compound-olefin copolymer wherein the cocatalyst to be used is an aluminoxane (or alumoxane) of the following formula (3) or (4): 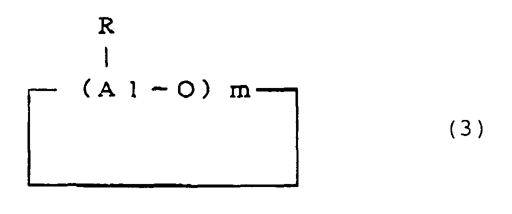 wherein R is a C₁₋₅ alkyl group, a C₆₋₁₀ aryl group or hydrogen, m is an integer of from 2 to 100, and the plurality of R may be the same or different, 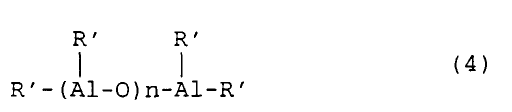 wherein R' is a C₁₋₅ alkyl group, a C₆₋₁₀ aryl group or hydrogen, n is an integer of from 2 to 100, and the plurality of R' may be the same or different.

As the aluminoxane, methylalumoxane, ethylalumoxane or triisobutylalumoxane, is preferably employed. Particularly preferred is methylalumoxane. If necessary, a mixture of these different types of alumoxanes, may be employed. Further, such an alumoxane may be used in combination with an alkylaluminum such as trimethylaluminum, triethylaluminum or triisobutylaluminum, or with a halogen-containing alkylaluminum such as dimethylaluminum chloride.

Addition of an alkylaluminum to the catalyst is effective for removing substances which hinder polymerization, such as a polymerization inhibitor in styrene, or moisture in the solvent, or for removing adverse effects against the polymerization reaction.

However, it is not necessarily required to add an alkylaluminum, if the amount of styrene, solvent, etc. is preliminarily reduced to a level not to influence the polymerization, by a known method such as distillation, bubbling with a dry inert gas or passing through a molecular sieve, or by increasing the amount of alumoxane to some extent or adding alumoxane in divided portions.

In the present invention, a boron compound may be used as a cocatalyst together with the above transition metal catalyst component.

The boron compound to be used as a cocatalyst may, for example, be triphenylcarbeniumtetrakis(pentafluorophenyl) borate {trityltetrakis(pentafluorophenyl)borate), lithium tetra(pentafluorophenyl)borate, tri(pentafluorophenyl)boran, trimethylammoniumtetraphenyl borate, triethylammoniumtetraphenyl borate, tripropylammoniumtetraphenyl borate, tri(n-butyl)ammoniumtetraphenyl borate, tri(n-butyl)ammoniumtetra(p-tolyl)phenyl borate, tri(n-butyl)ammoniumtetra(p-ethylphenyl)borate, tri(n-butyl)ammoniumtetra(pentafluorophenyl)borate, trimethylammoniumtetra(p-tolyl) borate, trimethylammoniumtetrakis-3,5-tetramethylphenyl borate, triethylammoniumtetrakis-3,5-dimethylphenyl borate, tributylammoniumtetrakis-3,5-dimethylphenyl borate, tributylammoniumtetrakis-2,4-dimethylphenyl borate, aniliumtetrakispentafluorophenyl borate, N,N'-dimethylaniliumtetraphenyl borate, N,N'-dimethylaniliumtetrakis(p-tolyl)borate, N,N'-dimethylaniliumtetrakis(m-tolyl)borate, N,N'-dimethylaniliumtetrakis(2,4-dimethylphenyl)borate, N,N'-dimethylaniliumtetrakis(3,5-dimethylphenyl)borate, N,N'-dimethylaniliumtetrakis(pentafluorophenyl)borate, N,N'-diethylaniliumtetrakis(pentafluorophenyl)borate, N,N'-2,4,5-pentamethylaniliumtetraphenyl borate, N,N'-2,4,5-pentaethylaniliumtetrraphenyl borate, di(isopropyl)ammoniumtetrakispentafluorophenyl borate, dicyclohexylammoniumtetraphenyl borate, triphenylphosphoniumtetraphenyl borate, tri(methylphenyl)phosphoniumtetraphenyl borate, tri(dimethylphenyl)phosphoniumtetraphenyl borate, triphenylcarbeniumtetrakis(p-tolyl)borate, triphenylcarbeniumtetrakis(m-tolyl)borate, triphenylcarbeniumtetrakis(2,4-dimethylphenyl)borate, triphenylcarbeniumtetrakis(3,5-dimethylphenyl)borate, tropiliumtetrakispentafluorophenyl borate, tropiliumtetrakis(p-tolyl)borate, tropiliumtetrakis(m-tolyl)borate, tropiliumtetrakis(2,4-dimethylphenyl)borate or tropiliumtetrakis(3,5-dimethylphenyl)borate.

Such a boron compound and the above-mentioned organoaluminum compound may be used at the same time.

Especially when a boron compound is used as a cocatalyst, addition of an alkylaluminum compound such as triisobutylaluminum is effective for the removal of impurities which adversely affect the polymerization, such as water contained in the polymerization system.

Aromatic vinyl compounds to be used in the present invention may, for example, be styrene and various substituted styrenes such as p-methylstyrene, m-methylstyrene, o-methylstyrene, o-t-butylstyrene, p-t-butylstyrene, p-chlorostyrene, o-chlorostyrene, and α-methylstyrene. Further, a compound having a plurality of vinyl groups in one molecule, such as divinylbenzene, may also be mentioned.

Industrially preferably, styrene, p-methylstyrene or p-chlorostyrene is used. Particularly preferably, styrene is used.

Further, as olefins to be used in the present invention, C₂₋₂₀ α-olefins such as ethylene, propylene, 1-butene, 1-hexene, 1-methyl-1-pentene, 1-octene and cyclic olefins such as cyclopentene, norbornene and norbonadiene, may be mentioned. These olefins may be used alone or in combination as a mixture of two or more of them. As such olefins, ethylene and propylene are preferred. In the following description, examples in which ethylene and propylene are used as olefins, will be referred to.

For the production of a copolymer of the present invention, the olefin, the above exemplified aromatic vinyl compound, the transition metal catalyst component as a metal complex and the cocatalyst are contacted. As to the manner and order for contacting, an optional known method may be employed.

As a method for the above copolymerization, it is possible to employ a method for carrying out the polymerization in a liquid monomer without using any solvent, or a method of using a single solvent or a mixed solvent selected from saturated aliphatic or aromatic hydrocarbons or halogenated hydrocarbons, such as pentane, hexane, heptane, cyclohexane, benzene, toluene, ethylbenzene, xylene, chlorobenzene, chlorotoluene, methylene chloride or chloroform. If necessary, batch polymerization, continuous polymerization, stepwise polymerization, slurry polymerization, preliminary polymerization or gas phase polymerization may be employed.

The copolymerization temperature is suitably from -78°C to 200°C. A polymerization temperature lower than -78°C is industrially disadvantageous, and if the temperature exceeds 200°C, decomposition of the metal complex is likely to take place, such being undesirable. Industrially more preferably, the temperature is from 0 to 160°C, particularly from 30 to 160°C.

The pressure for copolymerization is suitably from 0.1 to 100 atm, preferably from 1 to 30 atm, industrially particularly preferably, from 1 to 10 atm.

When an organoaluminum compound is used as a cocatalyst, it is preferably used in an aluminum atom/complex metal atom ratio of from 0.1 to 100,000, preferably from 10 to 10,000, relative to the metal of the complex. If the ratio is smaller than 0.1, the metal complex can not effectively be activated, and if it exceeds 100,000, such will be economically disadvantageous.

When a boron compound is used as a cocatalyst, it is used in an atomic ratio of boron atom/complex metal atom of from 0.01 to 100, preferably from 0.1 to 10, particularly preferably 1. If the atomic ratio is less than 0.01, the metal complex can not effectively be activated, and if it exceeds 100, such is economically disadvantageous.

The metal complex and the cocatalyst may be prepared by mixing them outside the polymerization tank, or they may be mixed in the tank during polymerization.

Further, the present invention provides an aromatic vinyl compound-olefin copolymer obtained by using the transition metal catalyst component of the present invention or by the method of the present invention.

Particularly, it provides an aromatic vinyl compound-olefin copolymer having an olefin content of from 0.1 to 99.5 mol% i.e. an aromatic vinyl compound content of from 0.5 to 99.9 mol%.

Preferably, it provides an aromatic vinyl compound-olefin copolymer having an olefin content of from 44.5 to 99.5 mol% i.e. an aromatic vinyl compound content of from 0.5 to 55.5 mol%.

Particular preferably, it provides an aromatic vinyl compound-olefin copolymer having an olefin content of from 70.0 to 99.5 mol% i.e. an aromatic vinyl compound content of from 0.5 to 30.0 mol%.

Further, the aromatic vinyl compound-olefin copolymer of the present invention may be such that the stereoregularity of phenyl groups in the alternating copolymer structure of olefin units and aromatic units may be of either an isotactic structure, a syndiotactic structure or an atactic structure.

The weight average molecular weight of the aromatic vinyl compound-olefin random copolymer of the present invention is from 1,000 to 1,000,000, preferably from 5,000 to 600,000, when the physical properties of the copolymer are taken into consideration. The molecular weight distribution (Mw/Mn) is at most 6, preferably at most 4, particularly preferably at most 3.

The aromatic vinyl compound-olefin copolymer of the present invention may have a melting point of from about 50 to 130°C (by DSC), within a styrene content range of from 0.5 to 30 mol%, but in some cases, the melting point may not be observed.

The aromatic vinyl compound-olefin random copolymer of the present invention may not necessarily be a pure copolymer, and so long as the composition, the molecular weight, etc. are within the above-described ranges, another monomer such as the above-mentioned α-olefin, an aromatic vinyl compound or a conjugated diene such as butadiene, may be copolymerized.

Further, depending upon the polymerization conditions, etc., an atactic homopolymer having an aromatic vinyl compound thermally, radically or cationically polymerized, may be contained in a small amount, but such an amount is at most 10 wt% of the entirety. Such a homopolymer can be removed by extraction with a solvent. However, if there is no particular problem from the viewpoint of the physical properties, the copolymer may be used as it contains such a homopolymer.

Further, for the purpose of improving the physical properties, it may be blended with other polymers. Furthermore, copolymers of the present invention having different styrene contents, may be blended.

Now, the present invention will be described in further detail with reference to Examples. However, it should be understood that the present invention is by no means restricted to such specific Examples.

The analyses of the copolymers obtained in the respective Examples and Comparative Examples were carried out by the following methods.

The 13C-NMR spectrum was measured using TMS as standard, by using α-500 manufactured by Nippon Denshi Kabushiki Kaisha (JEOL Ltd.) and using a chloroform-d solvent or a 1,1,2,2-tetrachloroethane-d2 solvent.

The styrene content in the copolymer was determined by 1H-NMR. As the apparatus, α-500 manufactured by Nippon Denshi Kabushiki Kaisha (JEOL Ltd.) and AC-250 manufactured by BRUKER Co. were used. The determination was made by comparing the intensity of the peak (6.5 to 7.5 ppm) attributable to the proton of a phenyl group and the proton peak (0.8 to 3 ppm) attributable to an alkyl group, measured by using TMS as standard and chloroform-d or 1,1,2,2-tetrachloroethane-d2 as a solvent.

The molecular weights in Examples are obtained by GPC (gel permeation chromatography) (HLC-8020, manufactured by TOSOH CORPORATION) using THF as a solvent, as weight average molecular weights calculated as standard polystyrene.

The DSC measurement was carried out by using DSC200, manufactured by Seiko Denshi K.K. in a nitrogen stream at a temperature raising rate of 10°C/min. to measure the glass transition temperature and the melting point.

### TEST EXAMPLES

### Preparation of transition metal catalyst component

### Compound A

### Preparation of 2,6-bis-[1-(2,6-dimethylphenylimino)-ethyl]pyridine iron(II) chloride complex

Into a 100 ml three-necked flask, 2,6-diacetylpyridine (1.0 g, 6.1 mmol) was put and dissolved in 30 ml of methanol. About 6 ml (large excess) of 2,6-dimethylaniline was added, and five drops of formic acid was added, followed by stirring in an oil bath at 50°C overnight.

Next day, the formed reddish brown solution was cooled to precipitate crystals to obtain 0.8 g of yellow crystals. Then, into a 50 ml Schrenck tube, a stirrer bar was put, and 2,6-bis-[1-(2,6-dimethylphenylimino)ethyl]pyridine (0.36 g, 0.97 mmol) and iron chloride tetrahydrate (0.184 g, 0.93 mmol) were put, followed by argon substitution. About 30 ml of THF was added thereto, followed by stirring at room temperature for about 2 hours, whereby a purple suspension was formed. Diethyl ether was added thereto to precipitate crystals, and purple crystals were collected by filtration. About 0.3 g of purple powdery crystals were obtained.

### Compound B

### Preparation of 2,6-bis-[1-(2-isopropylphenylimino)ethyl]-pyridine iron(II) chloride complex

Into a 100 ml three-necked flask, 2,6-diacetylpyridine (1.0 g, 6.1 mmol) was put and dissolved in 20 ml of dichloromethane. About 3 ml (large excess) of o-isopropylaniline was added, and five drops of formic acid was added, followed by stirring at room temperature overnight.

Next day, the formed brown solution was concentrated, and a few ml of methanol was added, and while cooling, the oil was washed, whereby crystals precipitated. The crystals were collected by filtration to obtain 1.2 g of slightly yellow crystals. The yield was 53%.

In the same manner as for compound A, complexing was carried out to obtain 0.4 g of blue powdery crystals.

### Compound C

### Preparation of 2,6-bis-[1-(2-methylphenylimino)ethyl]-pyridine iron(II) chloride complex

Into a 100 ml three-necked flask, 2,6-diacetylpyridine (1.0 g, 6.1 mmol) was put and dissolved in 20 ml of dichloromethane. About 3 ml (large excess) of o-toluidine was added, and five drops of formic acid was added, followed by stirring at room temperature overnight.

Next day, the formed brown solution was concentrated, and a few ml of methanol was added, and while cooling, the oil was washed, whereby crystals precipitated. The crystals were collected by filtration to obtain 1.0 g of yellow crystals. The yield was 48%.

In the same manner as for the compound A, complexing was carried out to obtain 0.4 g of bluish purple powdery crystals.

### Preparation of styrene-ethylene copolymer

### EXAMPLE 1

Polymerization was carried out by means of an autoclave having a capacity of 1 ℓ and equipped with a stirrer and a band heater for heating.

400 ml of toluene and 80 ml of styrene were charged, and heated and stirred at an internal temperature of 50°C. 0.2 ℓ/min of nitrogen was bubbled for about 3 hours to purge the interior of the system. Then, 8.4 mmol of triisobutylaluminum, and 84 mmol, based on Al, of methylalumoxane (MMAO-3A, manufactured by TOSOH AKZO CO.) were added. Immediately, ethylene was introduced, and after the pressure was stabilized at a level of 1.1 MPa (10 kg/cm²G), about 50 ml of a solution having 21 µmol of compound A i.e. 2,6-bis-[1-(2,6-dimethylphenylimino)ethyl]pyridine iron(II) chloride as a catalyst dissolved in toluene, was added to the autoclave from a catalyst tank installed above the autoclave. Polymerization was carried out for 2 hours while maintaining the internal temperature at 50°C and the pressure at 1.1 MPa. The obtained polymerized solution was gradually introduced into excess methanol vigorously stirred to let the formed polymer precipitate. The polymer was dried under reduced pressure until no more weight change was observed at 60°C to obtain 0.5 g of the polymer.

### EXAMPLE 2

Polymerization was carried out by means of an autoclave having a capacity of 1 ℓ and equipped with a stirrer and a band heater for heating.

400 ml of toluene and 80 ml of styrene were charged, and heated and stirred at an internal temperature of 50°C. 0.2 ℓ/min of nitrogen was bubbled for about 3 hours to purge the interior of the system, whereupon 8.4 mmol of triisobutylaluminum and 84 mmol, based on Al, of methylalumoxane (MMAO-3A, manufactured by TOSOH AKZO CO.) were added. Immediately, ethylene was introduced, and after the pressure was stabilized at 1.1 MPa (10 kg/cm²G), about 50 ml of a solution having 21 µmol of compound B i.e. 2,6-bis-[1-(2-isopropylphenylimino)ethyl]pyridine iron(II) chloride as a catalyst dissolved in toluene, was added to the autoclave from a catalyst tank installed above the autoclave. Polymerization was carried out for 5.5 hours while maintaining the internal temperature at 50°C and the pressure at 1.1 MPa. The obtained polymerized solution was gradually introduced into excess methanol which was vigorously stirred, to precipitate the formed polymer. The polymer was dried under reduced pressure until no more weight change was observed at 60°C, to obtain 23 g of the polymer.

### COMPARATIVE EXAMPLE

Polymerization was carried out by means of an autoclave having a capacity of 1 ℓ and equipped with a stirrer and a band heater for heating.

400 ml of toluene and 80 ml of styrene were charged, and heated and stirred at an internal temperature of 50°C. 0.2 ℓ/min of nitrogen was bubbled for about 3 hours to purge the interior of the system, and then 8.4 mmol of triisobutylaluminum and 84 mmol, based on Al, of methylalumoxane (MMAO-3A, manufactured by TOSOH AKZO CO.) were added. Immediately, ethylene was introduced, and after the pressure was stabilized at 1.1 MPa (10 kg/cm²G), about 50 ml of a solution having 21 µmol of compound C i.e. 2,6-bis-[1-(2-methylphenylimino)ethyl]pyridine iron(II) chloride dissolved in toluene, was added to the autoclave from a catalyst tank installed above the autoclave. Polymerization was carried out for 5.5 hours while maintaining the internal temperature at 50°C and the pressure at 1.1 MPa. The obtained polymerized solution was gradually put into excess methanol vigorously stirred, but no polymer formed.

The polymerization results are shown in Table 1.

**Table 1**

| Example No. | Yield (g) | Activity (g polymer/mol catalyst) | Styrene content (mol%) | Weight average molecular weight (Mw) | Number average molecular weight (Mn) | Mw/Mn | Glass transition point (°C) | Melting point (°C) |
|---|---|---|---|---|---|---|---|---|
| Example 1 | 0.5 | 2.4 × 10⁴ | 12.2 | 8.1 × 10⁴ | 4.7 × 10⁴ | 1.7 | -24 | 86 |
| | | | | 6.2 × 10³ | 5.0 × 10³ | 1.2 | | 129 |
| Example 2 | 23 | 1.1 × 10⁶ | 9.8 | 1.2 × 10⁵ | 6.0 × 10⁴ | 1.9 | -26 | 75.1 |
| Note) In Example 1, as a result of the GPC measurement, two peaks were observed and peak separation was carried out. | | | | | | | | |

The present invention provides a novel transition metal complex component useful for the production of an aromatic vinyl compound-olefin copolymer. Further, the present invention provides a polymerization catalyst comprising such a complex component and a cocatalyst, and a method for producing a novel aromatic vinyl compound-olefin copolymer employing such a polymerization catalyst.

## Claims

1. A method for producing an aromatic vinyl compound-olefin copolymer, which comprises copolymerizing an aromatic vinyl compound with an olefin by means of a transition metal catalyst component of the following formula (1): 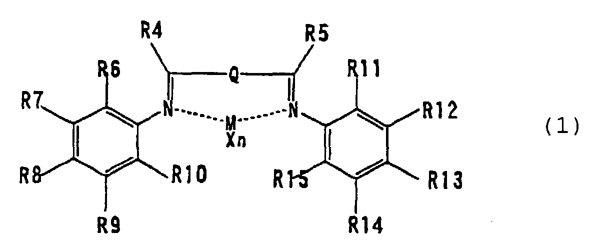 wherein Q is a single bond connecting the carbon atoms of the two imino groups, or a C₄₋₂₀ substituted aromatic, C₁₋₂₀ substituted saturated aliphatic or substituted unsaturated aliphatic substituent connecting the two imino groups, provided that from 1 to 3 carbon atoms in the substituted aromatic, substituted saturated aliphatic or substituted unsaturated aliphatic substituent may be replaced by nitrogen, oxygen, sulfur or phosphorus,
each of R4 and R5 which are independent of each other, is hydrogen, a C₁₋₂₀ alkyl group, a C₆₋₁₀ aryl group, or a C₇₋₂₀ alkylaryl group,
each of R6, R7, R8, R9 and R10 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R6 to R10 may together form a 5- to 8-membered aromatic or aliphatic ring, and the total carbon number of R6 and R10 is at least 2, or R6 and/or R10 forms a ring,
each of R11, R12, R13, R14 and R15 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R11 to R15 may together form a 5- to 8-membered aromatic or aliphatic ring, and the total carbon number of R11 and R15 is at least 2, or R11 and/or R15 forms a ring, and
M is a metal atom of Group 5 to Group 12, X is an anion, n is a number corresponding to the oxidation number of the metal and takes a value of 0, 1, 2 or 3.

2. A method for producing an aromatic vinyl compound-olefin copolymer, which comprises copolymerizing an aromatic vinyl compound with an olefin by means of a transition metal catalyst component of the following formula (2): 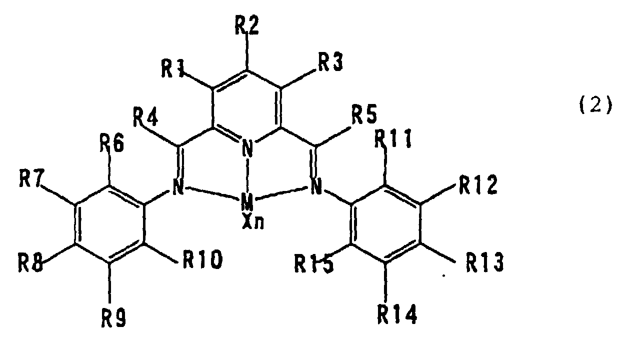 wherein each of R1, R2 and R3 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, or a PA₂ group (each A represents a C₁₋₁₀ hydrocarbon group), provided that adjacent R1, R2 and R3 may together form a 5- to 8-membered aromatic or aliphatic ring,
each of R4 and R5 which are independent of each other, is hydrogen, a C₁₋₂₀ alkyl group, a C₆₋₁₀ aryl group, or a C₇₋₂₀ alkylaryl group,
each of R6, R7, R8, R9 and R10 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R6 to R10 may together form a 5- to 8-membered aromatic or aliphatic ring, and the total carbon number of R6 and R10 is at least 2, or R6 and/or R10 forms a ring,
each of R11, R12, R13, R14 and R15 which are independent of one another, is hydrogen, a C₁₋₂₀ alkyl group, a C₆₋₁₀ aryl group, a C₇₋₂₀ alkylaryl group, a halogen atom, an OSiA₃ group, a SiA₃ group, a PA₂ group (each A represents a C₁₋₁₀ hydrocarbon group) or a NO₂ group, provided that adjacent R11 to R15 may together form a 5- to 8-membered aromatic or aliphatic ring, and the total carbon number of R11 and R15 is at least 2, or R11 and/or R15 forms a ring, and
M is a metal atom of Group 5 to Group 12, X is an anion, n is a number corresponding to the oxidation number of the metal and takes a value of 0, 1, 2 or 3.

3. The method for producing an aromatic vinyl compound-olefin copolymer, wherein the transition metal catalyst component as defined in Claim 1 or 2 wherein each of R6 and R11 are hydrogen atoms, and each of R10 and R15 is a group having at least two carbon atoms, is used.

4. The method for producing an aromatic vinyl compound-olefin copolymer, wherein the transition metal catalyst component as defined in Claim 1 or 2 wherein R6, R10, R11 and R15 are not simultaneously hydrogen atoms, is used.

5. The method for producing an aromatic vinyl compound-olefin copolymer, wherein a polymerization catalyst comprising the transition metal catalyst component as defined in Claim 1, 2, 3 or 4 and a cocatalyst, is used.

6. The method for producing an aromatic vinyl compound-olefin copolymer, wherein the polymerization catalyst as defined in Claim 5 is used wherein, as the cocatalyst, an aluminoxane (or alumoxane) of the following formula (3) or (4) is used, and, if necessary, an alkyl aluminum is used: 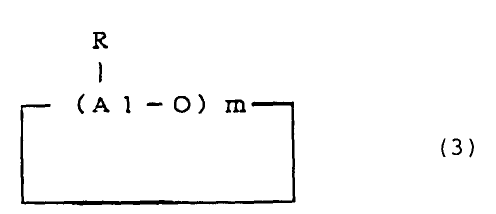 wherein R is a C₁₋₅ alkyl group, a C₆₋₁₀ aryl group or hydrogen, and m is an integer of from 2 to 100, provided that the plurality of R may be the same or different from one another; 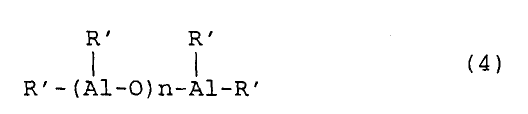 wherein R' is a C₁₋₅ alkyl group, a C₆₋₁₀ aryl group or hydrogen, and n is an integer of from 2 to 100, provided that the plurality of R' may be the same or different from one another.

7. The method for producing an aromatic vinyl compound-olefin copolymer, wherein the polymerization catalyst as defined in Claim 5 is used wherein, as the cocatalyst, a boron compound is used, and, if necessary, an alkyl aluminum is used.

8. A transition metal catalyst component for production of an aromatic vinyl compound-olefin copolymer, represented by the formula (1) or (2) as defined in Claim 1, 2, 3 or 4.

9. A polymerization catalyst for producing an aromatic vinyl compound-olefin copolymer, comprising the transition metal catalyst component and the cocatalyst, as defined in Claim 5, 6 or 7.

10. An aromatic vinyl compound-olefin copolymer obtained by polymerization by means of a polymerization catalyst comprising the transition metal catalyst component and the cocatalyst, as defined in Claim 5, 6 or 7.
